(19) Europäisches Patentamt / European Patent Office / Office européen des brevets

(11) **EP 1 504 523 B1**

(12) **EUROPÄISCHE PATENTSCHRIFT**

(45) Veröffentlichungstag und Bekanntmachung des Hinweises auf die Patenterteilung:
**26.11.2008   Patentblatt 2008/48**

(21) Anmeldenummer: **03704304.9**

(22) Anmeldetag: **10.02.2003**

(51) Int Cl.:
*H02P 21/00* $^{(2006.01)}$    *H02P 21/06* $^{(2006.01)}$

(86) Internationale Anmeldenummer:
**PCT/DE2003/000375**

(87) Internationale Veröffentlichungsnummer:
**WO 2003/094338 (13.11.2003 Gazette 2003/46)**

(54) **VERFAHREN UND VORRICHTUNG ZUR SENSORREDUZIERTEN REGELUNG EINER PERMANENTMAGNETERREGTEN SYNCHRONMASCHINE**

METHOD AND DEVICE FOR THE SENSOR REDUCED REGULATION OF A PERMANENT MAGNET EXCITED SYNCHRONOUS MACHINE

PROCEDE ET DISPOSITIF DE REGLAGE LIMITE PAR CAPTEUR D'UNE MACHINE SYNCHRONE A EXCITATION PAR AIMANT PERMANENT

(84) Benannte Vertragsstaaten:
**DE ES FR GB IT**

(30) Priorität: **03.05.2002   DE 10219822**

(43) Veröffentlichungstag der Anmeldung:
**09.02.2005   Patentblatt 2005/06**

(73) Patentinhaber: **ROBERT BOSCH GMBH**
**70442 Stuttgart (DE)**

(72) Erfinder:
  • **KUEHNER, Jochen**
    **71522 Backnang-Heiningen (DE)**
  • **RECHBERGER, Klaus**
    **71638 Ludwigsburg (DE)**

(56) Entgegenhaltungen:
  EP-A- 1 187 307          WO-A-01/20751

  • MORIMOTO S ET AL: "WIDE-SPEED OPERATION OF INTERIOR PERMANENT MAGNET SYNCHRONOUS MOTORS WITH HIGH-PERFORMANCE CURRENT REGULATOR" IEEE TRANSACTIONS ON INDUSTRY APPLICATIONS, IEEE INC. NEW YORK, US, Bd. 30, Nr. 4, 1. Juli 1994 (1994-07-01), Seiten 920-926, XP000469578 ISSN: 0093-9994

EP 1 504 523 B1

## Beschreibung

Stand der Technik

In der Kraftfahrzeugtechnik ist es bereits bekannt, in den Antriebsstrang eines Fahrzeugs zwischen dem Verbrennungsmotor und dem Getriebe eine permanentmagneterregte Synchronmaschine (PM-Synchronmaschine) als integrierten Kurbelwellenstartergenerator einzubauen.

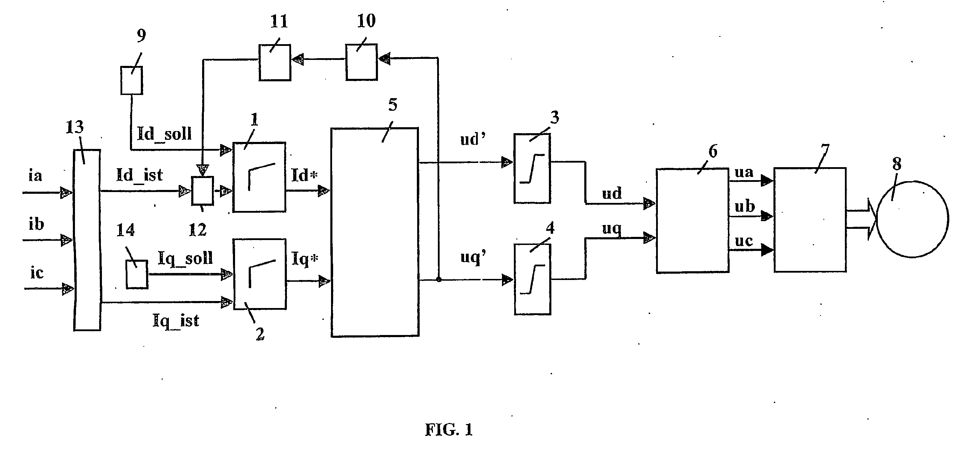

Die Regelung einer derartigen PM-Synchronmaschine erfolgt im rotorfeldorientierten Koordinatensystem. Ein Beispiel für eine feldorientierte Stromregelung einer PM-Synchronmaschine mit Pulswechselrichter ist in der Figur 1 gezeigt. Sie beruht auf einer Istwertmessung der Phasenströme eines 3-Phasen-Drehstromsystoms und einer auf den gemessenen Istwerten beruhenden Ermittlung einer Längs- und einer Querkomponente der Regelspannung bezüglich der Rotorlage. Der Querstrom ist dabei proportional zum gewünschten Drehmoment.

Bei dieser Regelung werden die aus dem 3-Phasen-Drehstromsystem der PM-Maschine abgeleiteten Phasenströme ia, ib, ic in einem Park-Transformator 13 in die Ströme Id_ist und Iq_ist eines rechtwinkligen Koordinatensystems umgewandelt. Der.Strom Id_ist stellt dabei den Istwert für den Längsstrom der Maschine dar. Der Strom Iq_ist bezeichnet den Istwert für den Querstrom der Maschine.

Der Längsstrom-Istwert Id_ist wird über ein Überlagerungsglied 12 einem Längsstromregler 1 zugeführt, der Querstrom-Istwert Iq_ist als Istwert einem Querstromregler 2. Das Überlagerungsglied 12 erhält als weiteres Eingangssignal ein Rückkopplungssignal, welches aus der Ausgangsgröße uq' eines stationären Entkopplungsnetzwerks 5 erhalten wird. Das stationäre Entkopplungsnetzwerk 5 erfüllt neben der für die Regelung wichtigen Entkopplung auch noch die Aufgabe, in Zusammenarbeit mit den Ausgangsbegrenzern 3 und 4 und einem Anti-Windup-Verfahren am Längsstromregler 1 eine Feldschwächung im oberen Drehzahlbereich zu erzielen. Diese Feldschwächung der PM-Synchronmaschine bei höheren Drehzahlen ist erforderlich, weil sonst die induzierte Maschinenspannung größer wäre als die maximale Stromrichterausgangsspannung. Letztere ist durch die Versorgungsspannung, bei der es sich um die Bordnetzspannung des Kraftfahrzeugs handelt, begrenzt. Bei diesem Feldschwächbetrieb wird der Stromrichter im übersteuerten Zustand betrieben, so dass die Stromrichterausgangsspannung nicht mehr sinusförmig ist.

Dem Sollwerteingang des Längsstromreglers 1 wird ein von einem Längsstrom-Sollwertgeber 9 generiertes Sollwertsignal und dem Sollwerteingang des Querstromreglers 2 ein von einem Querstrom-Sollwertgobor 14 generiertes Sollwertsignal zugeführt. Der Querstrom-Sollwertgeber 14 generiert das Querstrom-Sollwertsignal in Abhängigkeit vom Ausgangssignal eines Batteriespannungssensors.

Am Ausgang des Längsstromreglers 1 wird eine Stellgröße Id* für den Längsstrom und am Ausgang des Querstromreglers 2 eine Stellgröße Iq* für den Querstrom zur Verfügung gestellt. Diese Stellgrößen werden dem stationären Entkopplungsnetzwerk 5 zugeführt, welches unter Verwendung der genannten Stellgrößen eine Längsspannungskomponente ud' und eine Querspannungskomponente uq' für die Regelspannung der PM-Synchronmaschine ermittelt.

Diese Regelspannungskomponenten ud' und uq', bei denen es sich um Regelspannungskomponenten im rechtwinkligen Koordinatensystem handelt, werden über die Ausgangsbegrenzer 3 bzw. 4 einem inversen Park-Transformator 6 zugeführt. Dieser hat die Aufgabe, die im rechtwinkligen Koordinatensystem vorliegenden begrenzten Regelspannungskomponenten ud und uq in Regelspannungskomponenten ua, ub und uc des 3-Phasen-Drehstromsystems umzuwandeln. Diese werden in einem Pulswechselrichter 7 in Ansteuerimpulse für die PM-Synchronmaschine 8 umgewandelt.

Die am Ausgang des stationären Entkopplungsnetzwerks 5 ausgegebene Querspannungskomponente uq' der Regelspannung wird dem Betragsbildner 10 zugeführt, welcher den Betrag |uq'| der genannten Querspannungskomponente ermittelt.

Das Ausgangssignal des Betragsbildners 10 wird als Eingangssignal für einen Schwellwertschalter 11 verwendet. Überschreitet der Betrag |uq'| einen vorgegebenen Schwellenwert, dann wird am Ausgang des Schwellwertschalters 11 der Wert 0 ausgegeben. Unterschreitet der Betrag |uq'| den vorgegebenen Schwellenwert, dann wird am Ausgang des Schwellwertschalters 11 der Wert 1 ausgegeben.

Ausführungsbeispiele für die Ausgestaltung eines Enkopplungsnetzwerks, in welchem ein stationäres Maschinenmodell abgelegt ist, sind in der DE 100 44 181.5 der Anmelderin beschrieben.

Aus der DE 100 23 908 A1 ist ein Verfahren zur Ermittlung der Polradlage einer elektrischen Maschine bekannt, bei der es sich beispielsweise um einen Drehstromgenerator mit Pulswechselrichter handelt, wobei weiterhin eine Läuferwicklung, ein mit Induktivitäten versehener Ständer und eine zwischen zwei Strangklemmen angeordnete Spannungsquelle vorgesehen sind. Bei diesem Verfahren kann unter Verwendung von Schaltelementen in zwei Stränge verzweigt werden, in denen die jeweiligen Strangspannungsverläufe gemessen werden. Deren Überlagerung ermöglicht eine eindeutige Bestimmung der Polradlage. Beim bekannten Verfahren sind die Läuferpositionen für jeden der Spannungsverläufe tabellarisch abgelegt.

Weiterhin ist in der Zeitschrift ETEP, Vol. 8, No. 3, May/June 1998, Seiten 157 - 166, eine permanentmagneterregte Synchronmaschine mit Feldschwächbetrieb beschrieben, bei welcher ein großes Verhältnis von Maximal- zu Grundgeschwindigkeit vorliegt. Dies wird durch eine zusätzliche negative D-Komponente des Statorstromes erreicht. Im Rahmen der Regelung der bekannten Synchronmaschine wird eine Messung der Rotorposition unter Verwendung der Ausgangssignale von drei Hall-Sensoren durchgeführt, wobei ein Hall-Sensor jeweils einer der Phasen U, V, W zugeordnet ist.

Aus den Druckschriften: Morimoto S et al: "Wide-speed operation of interior permanent magnet synchronous motors with high-performance current regulator" IEEE Transactions on industry Applications, IEEE Inc. New York, US, Bd. 30, Nr. 4, 1. Juli 1994, Seiten 920-926, XP000469578 ISSN: 0093-9994 und WO 01/20751 A (Delphi Tech Inc) 22. März 2001 sind Vorrichtungen und Verfahren zur feldorientierten Regelung von permanentmagneterregten Synchronmaschinen bekannt, die Steuereinrichtungen zur Bildung von Ansteuerimpulsen für die Regelung der permanentmagneterregten Synchronmaschinen umfassen. Die Ansteuerimpulse werden dabei aus einer Längsspannungs- und einer Querspannungskomponente ermittelt.

Die mit der vorliegenden Erfindung zu lösende Aufgabe kann darin gesehen werden, daß ein sensorreduziertes Regelungs-system zur Verfügung gestellt wird, welches keine Stromsensorik bzw. keine Strommessung benötigt. Es erfolgt lediglich eine Messung der Batterieistspannung und des Polrad- bzw. Lagewinkels, wobei aus letzterem durch ein Differenzieren der Lageinformation nach der Zeit auch Informationen über die Drehzahl abgeleitet werden.

Gelöst wird diese Aufgabe durch die unabhängigen Ansprüche 1 und 7.

Im Generatorbetrieb der PM-Synchronmaschine treten im Vergleich zu konventionellen feldorientierten Regelungssystemen keinerlei Performanceeinbußen auf.

Da PM-Synchronmaschinen als Kurbelwellenstartergeneratoren einsetzbar sind und dort im Sinne einer Hochstromanwendung zum Einsatz kommen, ist das Wegfallen der Notwendigkeit einer Stromsensorik von großem Vorteil, da die erforderliche Stromsensorik bei Hochstromanwendungen besonders aufwendig ist.

Zeichnung

Die beiliegenden Figuren dienen der beispielhaften Erläuterung der Erfindung. Die Figur 1 zeigt ein Blockschaltbild einer herkömmlichen feldorientierten Stromregelung einer PM-Synchronmaschine. Die Figur 2 zeigt ein Blockschaltbild eines Ausführungsbeispiels einer erfindungsgemäßen feldorientierten Stromregelung einer PM-Synchronmaschine. Die Figur 3 zeigt ein Diagramm zur Veranschaulichung der Abhängigkeit der Stromgrundschwingungsfrequenz von der Drehzahl. Die Figur 4 zeigt ein Diagramm zur Veranschaulichung des maximalen Winkelfehlers in Abhängigkeit von der Drehzahl.

Beschreibung des Ausführungsbeispiels

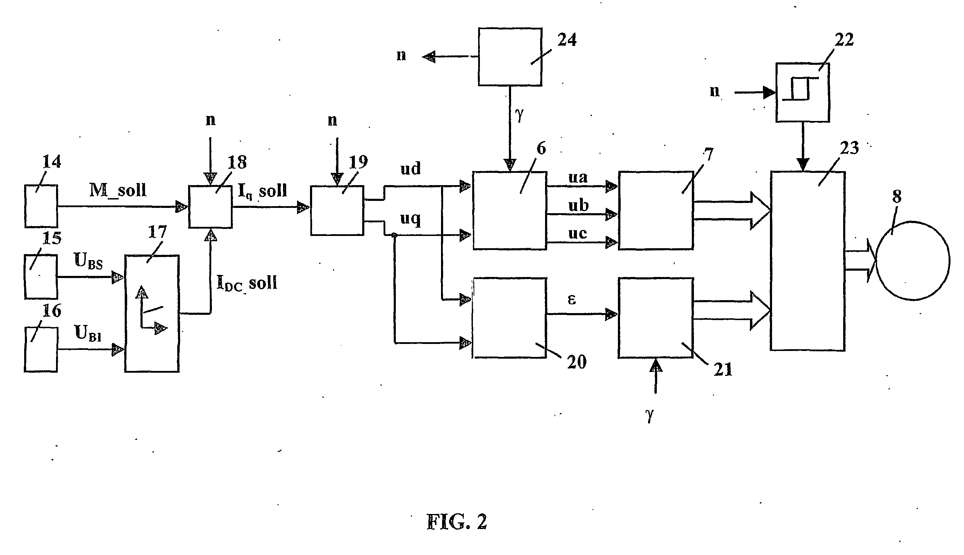

Die Figur 2 zeigt ein Blockschaltbild eines Ausführungsbeispiels einer erfindungsgemäßen feldorientierten Stromregelung einer PM-Synchronmaschine 8. Bei dieser Regelung ist es nicht notwendig, aus dem Mehrphasen-Drehstromsystem der PM-Maschine Phasenströme abzuleiten und mittels eines Park-Transformators in den Längsstrom-Istwert und den Querstrom-Istwert eines rechtwinkligen Koordinatensystems umzuwandeln.

Die in.der Figur 2 dargestellte Vorrichtung weist eine Logikeinheit 18 auf, die an ihrem Ausgang einen Sollwert Iq_soll für den Querstrom zur Verfügung stellt. Weiterhin ist die Logikeinheit 18 mit mehreren Eingängen versehen. Ein erster Eingang der Logikeinheit 18 ist mit einem übergeordneten Steuergerät 14 verbunden. Ein zweiter Eingang der Logikeinheit 18 ist an den Ausgang eines Batteriespannungsreglers 17 angeschlossen. Dem dritten Eingang der Logikeinheit 18 wird eine Information über die Drehzahl n der Maschine zugeleitet.

Der Batteriespannungsregler 17 ist eingangsseitig mit einem Batteriespannungssollwertgeber 15 und einem Batteriespannungssensor 16 verbunden. Der Batteriespannungssollwertgeber 15, beispielsweise ein übergeordnetes Energiemanagement, liefert dem Batteriespannungsregler 17 die Batteriesollspannung $U_{BS}$. Der Batteriespannungssensor 16 ist zur Messung der Batterieistspannung $U_{BI}$ vorgesehen. Die Batterieistspannung wird beispielsweise an einem nichtgezeichneten Zwischenkreiskondensator abgegriffen.

Der Startvorgang verläuft wie folgt: Vom übergeordneten Steuergerät 14 kommt ein Startbefehl, welcher eine Information über das Solldrehmoment M_soll enthält. Aus diesem wird in der Logikeinheit 18 der Querstrom-Sollwert Iq_soll abgeleitet. Der Querstrom-Sollwert Iq_soll wird dem stationären Entkopplungsnetzwerk 19 zugeführt, welches ein stationäres Maschinenmodell enthält. In diesem Entkopplungsnetzwerk wird der Querstrom-Sollwert mit Einbeziehung der Drehzahl n und des abgespeicherten Maschinenmodells in eine Längsspannungskomponente ud und eine Querspannungskomponente uq der Regelspannung umgesetzt. Dabei wird von einer abgespeicherten Tabelle Gebrauch gemacht, in welcher Maschinenparameter berücksichtigt sind. Je nach Genauigkeit des Maschinenmodells treten bei dieser Umsetzung mehr oder weniger große Einbußen an Performance auf.

Ab einem vorgegebenen Drehzahlschwellenwert, der beispielsweise bei 500 Umdrehungen pro Minute liegt, führt die Umschaltlogik 18 einen Umschaltvorgang durch, aufgrund dessen nunmehr das Ausgangssignal $I_{DC}$_soll des Batteriespannungsreglers 17 als Querstrom-Sollwert Iq_soll an das Entkopplungsnetzwerk 19 weitergeleitet wird. In diesem wird der Querstrom-Sollwert mit Einbeziehung der Drehzahl n in eine Längsspannungskomponente ud und eine Querspannungskomponente uq der Regelspannung umgesetzt.

Auch dabei wird von der abgespeicherten Tabelle Gebrauch gemacht, in welcher Maschinenparameter berücksichtigt sind. Ungenauigkeiten im Maschinenmodell werden durch die übergeordnete Spannungsregelung kompensiert und führen im Generatorbetrieb zu keinem Wirkungsgradverlust.

Die mittels des stationären Maschinenmodells ermittelten Spannungskomponenten ud und uq, bei denen es sich um Regelspannungskomponenten im rechtwinkligen Koordinatensystem handelt, werden einem inversen Park-Transformator 6 zugeführt. Dieser hat die Aufgabe, die im rechtwinkligen Koordinatensystem vorliegenden Regelspannungskomponenten ud und uq unter Berücksichtigung des Polradwinkels γ, der von einem Lagegeber 24 ermittelt wird, in Regelspannungskomponenten ua, ub und uc des 3-Phasen-Drehstromsystems umzuwandeln. Diese werden an einen Pulswechselrichter 7 weitergeleitet, welcher an seinem Ausgang Ansteuerimpulse für die PM-Synchronmaschine 8 zur Verfügung stellt. Der Ausgang des Pulswechselrichters 7 ist über eine Schalteinheit 23 mit der zu steuernden PM-Maschine 8 verbunden.

Die Spannungskomponenten ud und uq werden weiterhin einer Recheneinheit 20 zugeführt, die aus diesen Spannungskomponenten den Sollwinkel ε zwischen der Rotorpolachse und dem Soll-Statorspannungsraumzeiger ermittelt. Dies geschieht gemäß der folgenden Beziehung:

$$\varepsilon = \arctan \frac{ud}{uq} .$$

Da bei der feldorientierten Regelung Gleichgrößen mit einer über den gesamten Regelbereich gleichen Zeitkonstante geregelt werden, arbeitet die Recheneinheit 20 mit der gleichen Taktfrequenz wie die Regelung.

Das Ausgangssignal der Recheneinheit 20 wird einem Blockschaltwerk 21 zugeführt, welches direkt vom Polradwinkel γ getaktet wird. Informationen über den Polradwinkel werden - wie bereits oben ausgeführt wurde - beispielsweise mittels eines Lagegebers 24 gewonnen. Das Blockschaltwerk 21, dessen Ausgangssignal ebenfalls der Umschaltlogik 23 zugeführt wird, dient zur Auswahl von Ansteuerimpulsen gemäß eines von sechs möglichen Schaltzuständen des Stromrichters.

Anstelle eines Blockschaltwerkes kann auch ein dem Blockschaltwerk funktionell entsprechendes Softwareprogramm verwendet werden.

In der Umschaltlogik 23 erfolgt eine Umschaltung in dem Sinne, dass entweder die im Pulswechselrichter 7 oder die im Blockschaltwerk 21 generierten Ansteuerimpulse an die PM-Maschine 8 weitergeleitet werden. Diese Umschaltung erfolgt in Abhängigkeit von der Drehzahl n unter Berücksichtigung einer einstellbaren Schalthysterese, die mittels der Hystereseschaltung 22 realisiert wird. Der Hysteresebereich liegt beispielsweise zwischen 800 und 1000 Umdrehungen pro Minute.

Mit einer derartigen Ansteuerung wird ein ruckfreier Übergang vom Pulswechselrichterbetrieb, in welchem die Ausgangssignale des Schaltungsblockes 7 über die Umschaltlogik 23 an die PM-Maschine 8 weitergeleitet werden, in den Blockbetrieb, in welchem die Ausgangssignale des Blockschaltwerks 21 über die Umschaltlogik 23 an die PM-Maschine 8 weitergeleitet werden, sichergestellt. Dies ist darauf zurückzuführen, dass für den gesamten Drehzahlbereich dieselbe Reglerstruktur verwendet wird und dass bei der Umschaltdrehzahl das Ausgangssignal des Blockschaltwerks 21 gleich dem Ausgangssignal des Pulswechselrichters 7 ist, wobei das Ausgangssignal des Pulswechselrichters 7 mit einer statistischen Winkelungenauigkeit bzw. einem Jitter behaftet ist, welcher mit steigender Drehzahl größer wird und zu unerwünschten Leistungspendelungen im oberen Drehzahlbereich führt.

Der vorstehend beschriebene Übergang vom Pulswechselrichterbetrieb in den Blockbetrieb wird vorgenommen, um diese unerwünschten Leistungspendelungen im oberen Drehzahlbetrieb zu vermeiden.

Diese beim Stand der Technik auftretenden Leistungspendelungen im oberen Drehzahlbereich beruhen darauf, dass die Schaltfrequenz des Pulswechselrichters bzw. PWM-Umrichters im Hinblick auf auftretende Verluste nicht zu groß gewählt werden darf. Für den Anwendungsfall in einem Kurbelwellenstartergenerator wird deshalb mit einer PWM-Frequenz von beispielsweise 8 kHz gearbeitet. Der Zusammenhang zwischen der Drehzahl und der Stromgrundschwingungsfrequenz lautet wie folgt:

$$f = \frac{n}{60} \cdot p.$$

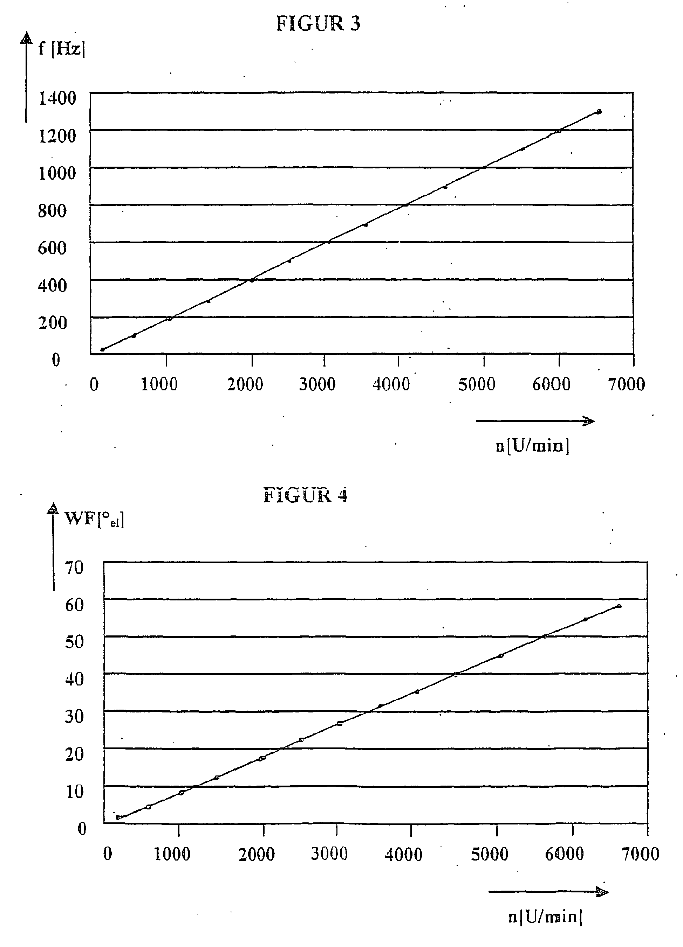

Für den Drehzahlbereich eines 2 • p = 24-poligen Kurbelwellenstartergenerators, dessen Drehzahlbereich zwischen 0 und 6500 Umdrehungen pro Minute liegt, ist damit ein Frequenzbereich von 0 - 1300 Hertz erforderlich. Dies ist in der Figur 3 gezeigt, welche ein Diagramm zur Veranschaulichung der Abhängigkeit der Stromgrundschwingungsfrequenz von der Drehzahl zeigt. In diesem Diagramm ist auf der Abszisse die Drehzahl n in Umdrehungen pro Minute und auf der Ordinate die Frequenz f in Hertz aufgetragen.

Da über den gesamten Betriebsbereich eine PWM-Frequenz von 8 kHz vorliegt, ergibt sich aufgrund des Verhältnisses von Stromgrundschwingung zu Pulsfrequenz eine Winkelungenauigkeit bezüglich des Soll-Spannungsnulldurchgangs und des tatsächlich geschalteten Spannungsnulldurchgangs. Dies ist in der Figur 4 gezeigt, welche für eine PWM-Frequenz von 8 kHz ein Diagramm zur Veranschaulichung des maximalen Winkelfehlers bezogen auf den Soll-Spannungsnulldurchgang in Abhängigkeit von der Drehzahl zeigt. In diesem Diagramm ist auf der Abszisse die Drehzahl n in Umdrehungen pro Minute und auf der Ordinate der Winkel-Fehler WF in Grad aufgetragen.

Diese statistische Ungenauigkeit bzw. dieser Jitter führt zu unerwünschten Leistungspendelungen im oberen Drehzahlbereich. Um diese statistische Ungenauigkeit zu vermeiden, erfolgt gemäß dem oben anhand der Figur 2 beschriebenen Ausführungsbeispiel eine drehzahlabhängige Umschaltung bzw. ein drehzahlabhängiger Übergang von einem PWM-Betrieb in einen Blockbetrieb. Alternativ dazu könnten die genannten Leistungspendelungen auch durch eine Erhöhung der PWM-Frequenzen, beispielsweise auf Schaltfrequenzen bis zu 90 kHz, vermieden werden. Dies ist aber wegen hoher Schaltverluste und wegen des hohen Stromrichteraufwandes nicht sinnvoll.

Weitere Vorteile des in der Figur 2 gezeigten Ausführungsbeispiels bestehen darin, dass nur eine geringe zusätzliche Prozessorbelastung vorliegt, da die Recheneinheit 20 drehzahlunabhängig mit der konstanten Regelfrequenz arbeiten kann. Im Falle eines PWM-Betriebes über den gesamten Regelbereich müsste die PWM-Frequenz und damit die Frequenz für die inverse Park-Transformation mit der Drehzahl erhöht werden, was eine große Prozessorbelastung zur Folge hätte.

Weiterhin ist die Schaltfrequenz des Stromrichters klein. Damit verbunden sind niedrige Schaltverluste des Stromrichters.

Ferner werden die auf eine PWM-Taktung zurückzuführenden Winkelungenauigkeiten eliminiert und damit auch die auf diese zurückzuführenden unerwünschten Leistungspendelungen. Die Winkelgenauigkeit hängt nur vom Lagegeber selbst ab.

Bezugszeichenliste

| 1 | Längsstromregler |
|---|---|
| 2 | Querstromregler |
| 3 | Begrenzer |
| 4 | Begrenzer |
| 5 | Entkopplungsnetzwerk |
| 6 | Inverser Park-Transformator |
| 7 | Pulswechselrichter |
| 8 | PM-Synchronmaschine |
| 9 | Längsstrom-Sollwertgeber |
| 10 | Betragsbildner |
| 11 | Schwellwertschalter |
| 12 | Überlagerungsglied |
| 13 | Park-Transformator |
| 14 | übergeordnete Steuerung (Motorsteuergerät) |
| 15 | Batteriespannungs-Sollwertgeber |
| 16 | Batteriespannungssensor |
| 17 | Batteriespannungsregler |
| 18 | Logikeinheit |
| 19 | Entkopplungsnetzwerk mit stationärem Maschinenmodell |
| 20 | Recheneinheit |
| 21 | Blockschaltwerk |
| 22 | Hystereseschaltung |
| 23 | Umschaltlogik |
| 24 | Lagegeber für Polradwinkel |
| ia, ib, ic | Phasenströme aus dem 3-Phasen-Drehstromsystem |
| Id_ist | Längsstrom-Istwert |
| Id_soll | Längsstrom-Sollwert |
| Iq_ist | Querstrom-Istwert |
| Iq_soll | Querstrom-Sollwert |
| Id* | Stellgröße für den Längsstrom |
| $I_{DC}$_soll | Querstrom-Sollwert vom Batteriespannungsregler |
| Iq* | Stellgröße für den Querstrom |
| M_soll | Solldrehmoment |
| n | Drehzahl |
| ua, ub, uc | Regelspannungen für das. 3-Phasen-Drehstromsys- tem |
| $U_{BS}$ | Batteriespannungs-Sollwert |
| $U_{BI}$ | Batteriespannungs-Istwert |
| ud, ud' | Längskomponenten der Regelspannung |
| uq, uq' | Querkomponenten der Regelspannung |
| WF | Winkelfehler |
| ε | Sollwinkel |
| γ | Polradwinkel |

**Patentansprüche**

1. Verfahren zur feldorientierten Regelung einer permanentmagneterregten Synchronmaschine mit folgenden Verfahrensschritten:

- Ermittlung eines Querstrom-Sollwertes (Iq_soll),
- Zuführen des ermittelten Querstrom-Sollwertes und einer Information über die Drehzahl an ein ein stationäres Maschinenmodell enthaltendes Entkopplungsnetzwerk,
- Ermittlung einer Längsspannungskomponente (ud) und einer Querspannungskomponente (uq) im Entkopplungsnetzwerk in alleiniger Abhängigkeit vom Querstrom-Sollwert, der Information über die Drehzahl und dem stationären Maschinenmodell, und
- Umwandlung der Längsspannungskomponente (ud) und der Querspannungskomponente (uq) in Ansteuerimpulse für die Synchronmaschine,
- Ableitung des Querstrom-Sollwerts (Iq_soll) von einem Batteriespannungsregler (17) bei Drehzahlen, die größer sind als der vorgegebene Drehzahlschwellenwert
- wobei der Batteriespannungsregler (17) den Querstrom-Sollwert in Abhängigkeit von einem von einem übergeordneten Energiemanagement gelieferten Batteriespannungs-Sollwert oder einem von einem Batteriespannungssensor (16) gelieferten Batteriespannungs-Istwert (U$_{BI}$) ermittelt.

2. Verfahren nach Anspruch 1, **dadurch gekennzeichnet, dass** der Querstrom-Sollwert in einer Logikeinheit ermittelt wird.

3. Verfahren nach Anspruch 1 oder 2, **dadurch gekennzeichnet, dass** in der Logikeinheit in Abhängigkeit von einem vorgegebenen Drehzahlschwellenwert ein Umschaltvorgang durchgeführt wird.

4. Verfahren nach Anspruch 3, **dadurch gekennzeichnet, dass** bei Drehzahlen, die kleiner sind als der vorgegebene Drehzahlschwellenwert, der Querstrom-Sollwert (Iq_Soll) von einem übergeordneten Steuergerät (14) abgeleitet wird.

5. Verfahren nach Anspruch 4, **dadurch gekennzeichnet, dass** der Querstrom-Sollwert aus einem vom übergeordneten Steuergerät (14) vorgegebenen Soll-Drehmoment abgeleitet wird.

6. Verfahren nach Anspruch 5, **dadurch gekennzeichnet, dass** das Soll-Drehmoment das Start-Drehmoment ist.

7. Vorrichtung zur feldorientierten Regelung einer permanentmagneterregten Synchronmaschine mit

- einem ein stationäres Maschinenmodell enthaltenden Entkopplungsnetzwerk (19), welches einen Eingang für einen Querstrom-Sollwert (Iq-soll) und einen Eingang für eine Information über die Drehzahl aufweist und welches zur Ermittlung einer Längsspannungskomponente (ud) und einer Querspannungskomponente (uq) in alleiniger Abhängigkeit vom Querstrom-Sollwert, der Information über die Drehzahl und dem stationären Maschinenmodell vorgesehen ist, und
- eine an das Entkopplungsnetzwerk (19) angeschlossene Umwandlungseinheit (6, 7, 20, 21, 23) zur Umwandlung der ermittelten Längsspannungskomponente (ud) und der ermittelten Querspannungskomponente (uq) in Ansteuerimpulse für die Synchronmaschine
- mit einer Logikeinheit (18), die bei Drehzahlen, die größer sind ais der vorgegebene Drehzahlschwellenwert sind, einen von einem Batteriespannungsregler (17) gelieferten Querstrom-Sollwert (Iq_soll) an ihrem Ausgang ausgibt.
- wobei der Batteriespannungsregler (17) den Querstrom-Sollwert (Iq_soll) in Abhängigkeit von einem von einem übergeordneten Energiemanagement gelieferten Batteriespannungs-Sollwert (U$_{BS}$) oder einem von einem Batteriespannungssensor (16) gelieferten Batteriespannungs-Istwert (UB$_I$) ermittelt.

8. Vorrichtung nach Anspruch 7, **dadurch gekennzeichnet, dass** sie eine Logikeinheit (18) enthält die einen Ausgang für den Querstrom-Sollwert (Iq_soll) aufweist.

9. Vorrichtung nach Anspruch 8, **dadurch gekennzeichnet, dass** die Logikeinheit (18) einen Eingang für eine Information über die Drehzahl aufweist und zur Durchführung eines Umschaltvorganges in Abhängigkeit von einem vorgegebenen Drehzahlschwellwert vorgesehen ist.

10. Vorrichtung nach Anspruch 9, **dadurch gekennzeichnet, dass** die Logikeinheit (18) bei Drehzahlen, die kleiner sind als der vorgegebene Drehzahlschwellenwert, einen von einem übergeordneten Steuergerät (14) abgeleiteten Querstrom-Sollwert an ihren Ausgang ausgibt.

11. Vorrichtung nach Anspruch 10, **dadurch gekennzeichnet, dass** die Logikeinheit (18) den Querstrom-Sollwert aus einem vom übergeordneten Steuergerät (14) abgeleiteten Soll-Drehmoment ableitet.

12. Vorrichtung nach Anspruch 11, **dadurch gekennzeichnet, dass** das Soll-Drehmoment das Start-Drehmoment ist.

13. Vorrichtung nach Anspruch 12, **dadurch gekennzeichnet, dass** der Batteriespannungsregler (17) einen Batteriespannungs-Sollwerteingang aufweist, welcher mit einem übergeordneten Energiemanagement (15) verbunden ist, und einen Batteriespannungs-Istwerteingang aufweist, welcher mit einem Batteriespannungssensor (16) verbunden ist.

**Claims**

1. Method for the field-oriented control of a synchronous machine with permanent-magnet excitation, which comprises the following method steps:

- determination of a quadrature current setpoint value (Iq_set),
- supplying the determined quadrature current setpoint value and an item of information about the rotation speed to a decoupling network which contains a stationary machine model,
- determination of an in-phase voltage component (ud) and a quadrature voltage component (uq) in the decoupling network as a sole function of the quadrature current setpoint value, the information about the rotation speed and the stationary machine model, and
- conversion of the in-phase voltage component (ud) and the quadrature voltage component (uq) into drive pulses for the synchronous machine,
- derivation of the quadrature current setpoint value (Iq_set) by a battery voltage controller (17) at rotation speeds which are greater than the predefined rotation speed threshold value,
- with the battery voltage controller (17) determining the quadrature current setpoint value as a function of a battery voltage setpoint value, which is supplied by a superordinate energy management system, or a battery voltage actual value ($U_{BI}$), which is supplied by a battery voltage sensor (16).

2. Method according to Claim 1, **characterized in that** the quadrature current setpoint value is determined in a logic unit.

3. Method according to Claim 1 or 2, **characterized in that** a changeover process is carried out in the logic unit as a function of a predefined rotation speed threshold value.

4. Method according to Claim 3, **characterized in that,** at rotation speeds which are lower than the predefined rotation speed threshold value, the quadrature current setpoint value (Iq_set) is derived by a superordinate controller (14).

5. Method according to Claim 4, **characterized in that** the quadrature current setpoint value is derived from a setpoint torque which is predefined by the superordinate controller (14).

6. Method according to Claim 5, **characterized in that** the setpoint torque is the starting torque.

7. Apparatus for the field-oriented control of a synchronous machine with permanent-magnet excitation, having

   - a decoupling network (19) which contains a stationary machine model and has an input for a quadrature current setpoint value (Iq_set) and an input for an item of information about the rotation speed and which is intended to determine an in-phase voltage component (ud) and a quadrature voltage component (uq) as a sole function of the quadrature current setpoint value, the information about the rotation speed and the stationary machine model, and
   - a conversion device (6, 7, 20, 21, 23), which is connected to the decoupling network (19), for converting the determined in-phase voltage component (ud) and the determined quadrature voltage component (uq) into drive pulses for the synchronous machine,
- having a logic unit (18) which outputs at its output a quadrature current setpoint value (Iq_set), which is supplied by a battery voltage controller (17), at rotation speeds which are greater than the predefined rotation speed threshold value,
- with the battery voltage controller (17) determining the quadrature current setpoint value (Iq_set) as a function of a battery voltage setpoint value ($U_{BS}$), which is supplied by a superordinate energy management system, or a battery voltage actual value ($U_{BI}$), which is supplied by a battery voltage sensor (16).

8. Apparatus according to Claim 7, **characterized in that** it contains a logic unit (18) which has an output for the quadrature current setpoint value (Iq_set).

9. Apparatus according to Claim 8, **characterized in that** the logic unit (18) has an input for an item of information about the rotation speed and is intended to carry out a changeover process as a function of a predefined rotation speed threshold value.

10. Apparatus according to Claim 9, **characterized in that,** at rotation speeds which are lower than the predefined rotation speed threshold value, the logic unit (18) outputs at its output a quadrature current setpoint value which is derived by a superordinate controller (14).

11. Apparatus according to Claim 10, **characterized in that** the logic unit (18) derives the quadrature current setpoint value from a setpoint torque which is derived by the superordinate controller (14).

12. Apparatus according to Claim 11, **characterized in that** the setpoint torque is the starting torque.

13. Apparatus according to Claim 12, **characterized in that** the battery voltage controller (17) has a battery voltage setpoint value input, which is connected to a superordinate energy management system (15), and a battery voltage actual value input, which is connected to a battery voltage sensor (16).

**Revendications**

1. Procédé pour une régulation orientée selon le champ d'une machine synchrone excitée par un aimant permanent et comprenant les étapes de procédé suivantes :

   - détermination d'une valeur de consigne du

courant transversal (Iq_soll),

- application de la valeur de consigne obtenue pour le courant transversal et d'une information concernant la vitesse de rotation à un réseau de découplage comportant un modèle stationnaire de machine,

- détermination d'une composante de tension longitudinale (ud) et d'une composante de tension transversale (uq) dans le réseau de découplage, dépendant uniquement de la valeur de consigne du courant transversal, de l'information concernant la vitesse de rotation et du modèle stationnaire de la machine, et

- conversion de la composante de tension longitudinale (ud) et de la composante de tension transversale (uq) en impulsions de commande de la machine synchrone,

- dérivation de la valeur de consigne du courant transversal (Iq_soll) à partir du régulateur de fonction de batterie (17) pour des vitesses de rotation supérieures à une valeur prédéfinie de seuil de la vitesse de rotation,

- le régulateur de tension de batterie (17) déterminant la valeur de consigne du courant transversal en fonction d'une valeur de consigne de la tension de batterie fournie par un moyen principal de gestion d'énergie, ou à partir d'une valeur réelle de tension de batterie ($U_{BI}$) fournie par un capteur de tension de batterie (16).

2. Procédé selon la revendication 1,
   **caractérisé en ce que**
   la valeur de consigne du courant transversal se détermine dans une unité logique.

3. Procédé selon la revendication 1 ou 2,
   **caractérisé en ce qu'**
   l'unité logique effectue une opération de commutation, en fonction d'une valeur prédéfinie de seuil de la vitesse de rotation.

4. Procédé selon la revendication 3,
   **caractérisé en ce que**
   pour des vitesses de rotation inférieures à la valeur prédéfinie de seuil de la vitesse de rotation, on déduit la valeur de consigne du courant transversal (Iq_soll) à partir d'un appareil principal de commande (14).

5. Procédé selon la revendication 4,
   **caractérisé en ce qu'**
   on déduit la valeur de consigne du courant transversal d'un couple de consigne prédéfini par un appareil principal de commande (14).

6. Procédé selon la revendication 5,
   **caractérisé en ce que**
   le couple de consigne est le couple de démarrage.

7. Dispositif de régulation orienté suivant le champ d'une machine synchrone excitée par un aimant permanent comprenant :

   - un réseau de découplage (19) comportant un modèle de machine stationnaire, ayant une entrée pour une valeur de consigne de courant transversal (Iq_soll) et une entrée pour une information concernant la vitesse de rotation et qui est prévu pour déterminer une composante de tension longitudinale (ud) et une composante de tension transversale (uq), dépendant uniquement de la valeur de consigne de courant transversal, de l'information concernant la vitesse de rotation et du modèle de machine, stationnaire, et

   - une unité de conversion (6, 7, 20, 21, 23) reliée au réseau de découplage (19) pour convertir la composante de tension longitudinale (ud) obtenue et la composante de tension transversale (uq) obtenue, en impulsions de commande de la machine synchrone,

   - une unité logique (18) qui, pour des vitesses de rotation supérieures à la valeur prédéfinie de seuil de vitesse de rotation, fournit à la sortie une valeur de consigne de courant transversal (Iq_soll) donnée par le régulateur de tension de batterie (17),

   - le régulateur de tension de batterie (17) déterminant la valeur de consigne du courant transversal (Iq_soll) en fonction d'une valeur de consigne de tension de batterie ($U_{BS}$) fournie par un moyen principal de gestion d'énergie ou d'une valeur réelle de tension de batterie ($U_{BI}$) fournie par un capteur de tension de batterie (16).

8. Dispositif selon la revendication 7,
   **caractérisé en ce qu'**
   il comporte une unité logique (18) ayant une sortie pour la valeur de consigne de courant transversal (Iq_soll).

9. Dispositif selon la revendication 8,
   **caractérisé en ce que**
   l'unité logique (18) a une entrée pour une information concernant la vitesse de rotation et pour effectuer une opération de commutation en fonction d'une valeur prédéterminée de seuil de vitesse de rotation.

10. Dispositif selon la revendication 9,
    **caractérisé en ce que**
    pour des vitesses de rotation inférieures à une valeur prédéterminée de seuil de vitesse de rotation, l'unité logique (18) émet à sa sortie une valeur de consigne du courant transversal fournie par l'appareil principal de commande (14).

**11.** Dispositif selon la revendication 10, **caractérisé en ce que** l'unité logique (18) déduit la valeur de consigne du courant transversal du couple de consigne fournit par un appareil principal de commande (14).

**12.** Dispositif selon la revendication 11, **caractérisé en ce que** le couple de consigne est le couple de démarrage.

**13.** Dispositif selon la revendication 12, **caractérisé en ce que** le régulateur de tension de batterie (17) présente une entrée de valeur de consigne de tension de batterie reliée à un moyen principal de gestion d'énergie (15) et ayant une entrée de valeur réelle de tension de batterie reliée à un capteur de tension de batterie (16).

FIG. 1

FIG. 2

## FIGUR 3

## FIGUR 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10044181
- DE 10023908 A1
- WO 0120751 A

**In der Beschreibung aufgeführte Nicht-Patentliteratur**

- *Zeitschrift ETEP,* Mai 1998, vol. 8 (3), 157-166
- Wide-speed operation of interior permanent magnet synchronous motors with high-performance current regulator. **MORIMOTO S et al.** IEEE Transactions on industry Applications. IEEE Inc, 01. Juli 1994, vol. 30, 920-926